# EUROPEAN PATENT APPLICATION

(11) **EP 1 624 383 A2**
(43) Date of publication of application: **08.02.2006**
(21) Application number: 05107154.6
(22) Date of filing: 03.08.2005
(51) Int. Cl.: G06F 17/24

(54) **Adaptive system and process for client/server based document layout**

(30) Priority: 05.08.2004 US 912703
(71) Applicant: MICROSOFT CORPORATION, Redmond, WA 98052 (US)
(72) Inventor: Jacobs, Charles E., Redmond, WA 98052 (US)
(74) Representative: Zimmer, Franz-Josef

(57) **Abstract**

A system and process for a server to provide a page of a document generated by an adaptive document layout application in a fixed-layout document format to a client computer over a client-server based network is presented. The document page is provided in response to a request for the page from the client, which may also specify a desired window size and/or desired formatting. In general, the server, referred to hereinafter as the Adaptive Document Layout (ADL) server, receives the request from a client computer and generates the requested document page using the aforementioned adaptive document layout application. The generated page is then converted into a prescribed fixed-layout document format. Finally, the ADL server transmits the page to the client computer via the client-server based network.

## Description

### BACKGROUND

### Technical Field:

The invention is related to providing an adaptive document layout system and process, and more particularly, to such a system and process that provides document pages generated by an adaptive document layout application resident on a server to a client over a client-server based network.

### Background Art:

Written documents and text are commonly sent from a server to a client over a computer network connection, particularly over an intranet or the Internet. This is typically accomplished by a client computer associated with a reader making a request for a document from a server. The server then transfers the requested document to the client via the network. The client computer then displays it to the reader in the normal manner.

However, the above-described online reading experience currently leaves a lot to be desired. Web page layout is usually of far lesser quality than that of paper publications. In addition, the reader is required to scroll down through a document, which is not conducive to easy reading. Still further, if the reader changes the size of the browser window on his or her display, the result is just a bigger or smaller version of the document. The document is not reformatted in any way to make it more readable.

Attempts in the past to remedy the shortcoming of the typical online reading experience centered around the use of an adaptive document layout (*ADL*) system. An ADL system uses adaptive page templates to produce high-quality document layouts, adapted to fit the size of the window being used. Unfortunately, all of the formatting and pagination is done on the reader's computer, which means that anyone wishing to view a well-laid-out document would need to have the client application resident on their computer. Considering the justifiable fear the public has about installing software, it is important to have a way to view ADL documents without requiring the installation of software on the client.

### SUMMARY

The present invention is directed toward a system and process for a server to provide a page of a document generated by an adaptive document layout application in a fixed-layout document format to a client computer over a client-server based network. Thus, the layout application is not located on the client computer, but in a server. In general, the server, referred to hereinafter as the Adaptive Document Layout (ADL) server, receives a request from a client computer for a page of a document that is either stored in the server or readily accessible by it. The ADL server then generates the requested document page using the aforementioned adaptive document layout application and then converts it into a prescribed fixed-layout document format. Finally, the ADL server transmits the page to the client computer via the client-server based network.

In regard to a client requesting a new page of a document from the ADL server, it is noted that this can occur automatically. For example, a reader can enter a command (such as a page up or page down command) into the client computer via any conventional user interface (such as a keyboard). A request for a new page is then automatically transmitted to the ADL server.

In regard to the prescribed fixed-layout format, this can a HTML page employing Cascading Style Sheets (CSS) absolute positioning properties to set the font and position of each word and graphics object in the page. However, the invention is not limited to just this format, rather it can be any fixed-layout format such as the Portable Document Format (PDF) or the Extensible Application Markup Language (XAML) format.

In addition to specifying a new page be provided, the client can also request that the page be configured so as to fit in a specified window size. For example, a reader can change the size of the display window in a browser application running on the client computer. The new window size is then automatically transmitted to the ADL server along with the request for a new page. The ADL server receives these requests and generates the requested page in a form that will fit in the specified window size. To accomplish this task, the ADL server first determines if the specified window size is the same as that specified in an immediately preceding request from the client. If the window size has changed, the server instructs its adaptive document layout application to repaginate the document in accordance with the newly received window size specification. The layout application can then generate page requested from the client, which can be the current page number or a new page number, and which may or may not contain any of the content on the page the reader was previously viewing. However, in another embodiment of the repagination procedure, the layout application generates a page of the repaginated document that includes all, or at least as much of the initial portion of the text and/or graphics that would have been included on the requested page had the window size not changed, as will fit into the currently specified window size.

The client can also request that the page be formatted in one or more specified ways that are within the capability of the adaptive document layout application to implement. For example, the client might request changing the font type or size to make the page more readable. This feature can be particularly useful to some who is visually impaired. The ADL server would, upon receiving such a request, use its adaptive document layout application to generating the requested page so as to exhibit the formatting specified in the client request.

The present system and process can also include a caching feature to reduce the processing load on the ADL server. Essentially, this feature involves caching each document page generated by the ADL server for future use should another request for the same page be received. More particularly, before generating a new document page in response to a client request, the ADL server determines if the requested page has been cached. If so, the cached page is retrieved and transmitted to the requesting client computer. If however, the requested page has not been cached, it is generated as described before using the adaptive document layout application. However, rather than just transmitting the document page to the client, it is also cached. In this way a database of previously generated document pages is built.

The caching feature is also easily extended into an embodiment of the system and process that allow window size and/or formatting requests to be specified by a client. Essentially, this is accomplished by categorizing each cached document page when it is stored. The categorization would not only include the document it came from and its page number, but also its window size (if applicable) and any special formatting (if applicable). Thus, when the ADL server determines if the requested document page has been previously cached, it searches the categorizations to find the requested page that also has the specified window size and/or the specified formatting. If a match is not found a new page is generated and cached as described previously.

To further reduce the processing load on the ADL server, as well as the storage requirements, the aforementioned window size parameter could be quantized. One way to accomplish this would be to categorize the cached document as before, except instead of categorizing a page by its exact window size, it would be categorized according to what size range, among a series of prescribed window size ranges that the page's window size falls into. Then, when the ADL server determines if there is a cached document page that has the specified window size, it actually determines if there is a cached page that has a window size in the same size range as the specified size. In this case, if a match is found, the cache page is transmitted to the client even though it may not have the exact same window size as that requested. In this way, fewer document pages have to be generated and cached, while still providing substantially what was requested. In an alternate embodiment of the foregoing window size quantization feature, rather than categorizing the cached pages by a size range, the exact size could be used. However, when ADL server determines if there is a cached document page that has the specified window size, it determines if there is a cached page that has a window size within a prescribed tolerance of the requested window size. If so that page is transmitted to the client.

The caching feature can further be extended to include pre-caching document pages. This would involve generating document pages for a document at a variety of window sizes, and possible even a variety of formatting choices. These pages are then cached prior to there being a request for a page. In this way a database is constructed that makes it more likely that a cached page can be provided rather than the ADL server having to generate a new page. It is noted that traffic patterns could also be monitored on the web site to learn which sizes are most popular, and then only pre-cached pages for popular sizes.

In addition to caching document pages as described above, the aforementioned pagination results can also be cached. This is advantageous because, like the generation of document page, repaginating a document is also a processor intensive operation. Thus, in cases where a cached document page is not available, but the document in question had been previously repaginated for the same window size as currently requested in order to provide a different page, the cached pagination results can be retrieved and used again in generating the currently specified page. In this way, paginating a document for a particular window size need only be done once, thereby making the process more efficient.

In addition to the just described benefits, other advantages of the present invention will become apparent from the detailed description which follows hereinafter when taken in conjunction with the drawing figures which accompany it.

### DESCRIPTION OF THE DRAWINGS

The specific features, aspects, and advantages of the present invention will become better understood with regard to the following description, appended claims, and accompanying drawings where:
FIG. 1 is a diagram depicting a general purpose computing device constituting an exemplary system for implementing the present invention.
FIG. 2 is a block diagram showing the general computer program module architecture for an embodiment of the Adaptive Document Layout (ADL) server/client system according to the present invention.
FIGS. 3A-B are a flow chart diagramming an embodiment of the ADL server/client process according to the present invention.

### DETAILED DESCRIPTION OF THE PREFERRED EMBODIMENTS

In the following description of preferred embodiments of the present invention, reference is made to the accompanying drawings which form a part hereof, and in which is shown by way of illustration specific embodiments in which the invention may be practiced. It is understood that other embodiments may be utilized and structural changes may be made without departing from the scope of the present invention.

### 1.0 The Computing Environment

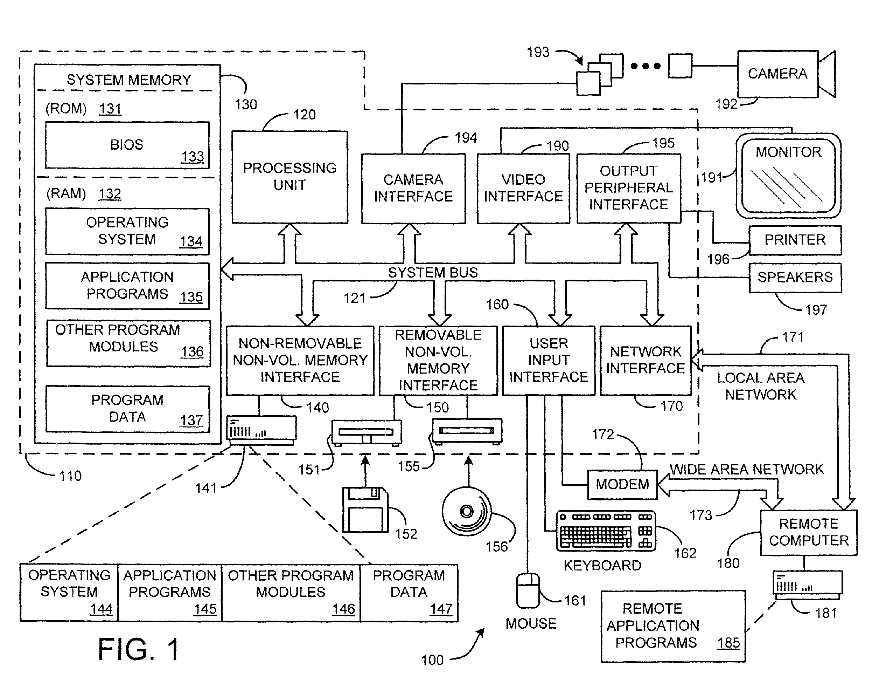

Before providing a description of the preferred embodiments of the present invention, a brief, general description of a suitable computing environment in which the invention may be implemented will be described. Figure 1 illustrates an example of a suitable computing system environment 100. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195. An audio/video (A/V) capture device 192 (such as the 360 degree camera of the previously described DM system) can also be included as an input device to the personal computer 110. The AN output from the device 192 is input into the computer 110 via an appropriate A/V interface 194. This interface 194 is connected to the system bus 121, thereby allowing the images to be routed to and stored in the RAM 132, or one of the other data storage devices associated with the computer 110.

The computer 110 operates in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### 2.0 Adaptive Document Layout (ADL) Server/Client System And Process

The exemplary operating environment having now been discussed, the remaining part of this description section will be devoted to a description of the program modules embodying the invention. Generally, the system and process according to the present invention involves running a version of an adaptive document layout program on a server (which will be referred to as the Adaptive Document Layout (ADL) server) and sending pages having a fixed-layout document format over a computer network (such as an intranet or the Internet) to a web browser running on a client computer. In the prior art, adaptive layout systems were designed to produce high-quality document layouts, adapted to fit the size of the window being used. Unfortunately, all of the formatting and pagination was done on the client, which means that anyone wishing to view a document would need to have the client application. The present invention solves the shortcomings and drawbacks of the prior art by providing a version of the layout system than can run on a server and send pages in a fixed-layout document format that accurately reproduces the layout of the page. The reading experience in the browser is very similar to the experience of using a client-based Adaptive Document Layout Program―namely a high-quality, easily read, page is produced. It is also noted that because the adaptive document layout application is resident on the server and used by multiple clients, it is possible to employ a layout application that is powerful and feature rich. This has a significant advantage to an on-line reader because installing such a powerful and rich version of the layout application on the reader's computer may not be economically or practically possible. Thus, the reader enjoys the advantages of a top of the line adaptive document layout program without incurring the cost of installing it on their own computer.

In addition, the reader has the ability to interact with the document. For example, at a basic level, the reader is able to change the current page and to resize the browser window (which acts as the document viewing window on the reader's computer display). When a new page is requested by the reader, it is provided by the ADL program resident on the ADL server. Likewise, when the reader directs that a current or new page be resized, the document is reformatted by the ADL program to fit the desired document page to the new window size. The new and/or resized page is then sent to the client computer for display to the reader.

In regard to the fixed-layout document format, this can be any desired. For example, standard HTML pages can be created in a fixed-layout format by using the Cascading Style Sheets (CSS) absolute positioning properties available in most modern browser programs to set the font and position of each word and graphics object. This prevents the browser from changing the format created by the ADL program when it displays the page to the reader. Alternately, the page could be generated by the ADL program in other fixed-layout document formats, such as Portable Document Format (PDF) or Extensible Application Markup Language (XAML) formats.

A more detailed description of the foregoing system and the process used to implement it will now be presented.

### 2,1 ADL Server/Client System Architecture

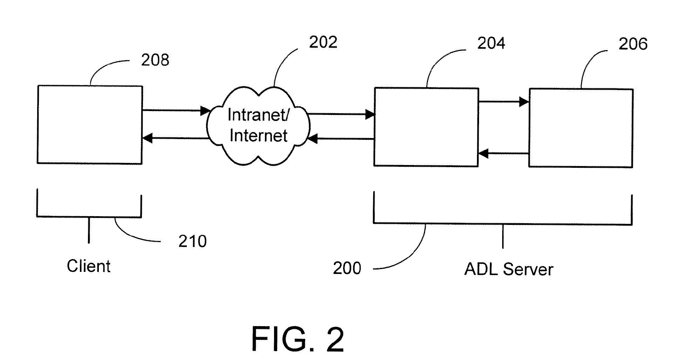

Referring to Fig. 2, the ADL server/client system includes the following modules. On the ADL server 200 side of the computer network 202, there is a web application module 204 and ADL module 206. In general, the web module 204 acts as the go between for the client module 208 and ADL module 206. In one embodiment of the present system, the web application module 204 includes an ASP. NET program that runs on the web server 200. It receives a page number and/or display size request sent over the network by the client module 208. It communicates this page and size information to the ADL module 206, and inputs from that module the data for the requested page in the prescribed fixed-layout document format. Finally, the web application module 204 is responsible for packaging the page data inside a web page it produces and sends the webpage over the network back to the client computer 210.

The aforementioned ADL module 206 is the modified version of an ADL client/viewer application. The ADL client/viewer program used can be any desired. However, tested embodiments of the present invention employed the ADL client/viewer application that is the subject of a co-pending application entitled "System And Method For Facilitating Adaptive Grid-Based Document Layout". The co-pending application was filed on January 30, 2004 and assigned serial number 10/768,993. This ADL program is modified using conventional methods to respond to requests from the web application module 204 for reformatting the document and to produce the requested page in the prescribed fixed-layout document format.

The aforementioned client module 208 is resident on the client computer 210. This module 208 includes a small application (e.g., in the form of JavaScript code) that runs inside the client's browser program that is also resident on the client's computer 210. Essentially, all this application does is to respond to the page change commands and to the browser window resize events. When one of these events happens, a new webpage is requested from the ADL server 200 that reflects the desired page of the document in the desired size. When the new page is received from the ADL server 200 it is handled by the client's browser program in the normal manner and displayed to the reader. The page change and resized commands can be entered in any appropriate manner via a typical user interface. For example, the page change command could be entered by a reader using the page up and page down keys on a keyboard connected to the client computer 210. The resize command could be entered by the reader using the conventional click and drag method typically used to resize windows on a display. A computer mouse could be used to accomplish this task.

It is noted that the web application module 204 could optionally include a caching feature that would cache each page generated by the ADL module 206 along with information identifying the document it comes from, its page number and window size of the page. Thus, this feature would be global in that any page requested by any of multiple clients would be cached. While this optional feature would require more storage capability in the ADL server 200, it would reduce the processing load as each page would only be generated once. Still further, the caching feature could employ window size quantization to reduce the number of pages that need to be cached. Essentially, a series of window size ranges is created. For example, in tested embodiments the ranges involved were increments of ten pixels in width by ten pixels in height, thereby reducing the size necessary to cache all possible sizes to 1/100^{th} of that required without the cache. When a page is generated it is cached and identified, not by its actual window size, but by the size range it falls into. Then, whenever the same page is requested with a window size that also falls into the size range associated with a cached page, that page is provided even if the requested window size does not exactly match that of the cached page. Alternately, the pages could be cached with an identification of their actual size, but when a request for a page of a particular size is received from a client, the web application module 204 would determine if there is a cached version of the requested page that has a window size within a prescribed tolerance of the requested size. If so, that page is provided instead of having the ADL module 206 generate a new page at the actual requested window size. It would also be possible, if large amounts of storage are available, to pre-cache pages. This would entail generating pages of a document in various window sizes in advance and storing them in anticipation client requests for these pages.

It is further noted that the web application module 204 could optionally include a pagination results caching feature. When a new window size is requested, the ADL module 206 repaginates the document in question in order to fit each page into the specified viewing area. However, like the generation of document page, repaginating a document is a processor intensive operation. Thus, in cases where a cached document page is not available, but the document in question had been previously repaginated for the same window size as currently requested in order to provide a different page, the cached pagination results can be retrieved and used again in generating the currently specified page. In this way, paginating a document for a particular window size need only be done once, thereby making the process more efficient.

It is also noted that other document layout format commands could be introduced into the system. For example, the client module could be modified so that a reader could specify additional document layout requirement, such as the font type or size that is to be used in generating the requested page, or making any images in the requested page smaller to accommodate a limited bandwidth on the network. Other additional formatting features are described in the aforementioned co-pending application. The web application module 204 would receive these additional request parameters and provide them to the ADL module 206, which would in turn apply them when generating the requested page. These additional parameters would also be added to the identifying information used in the optional caching feature to classify a cached page. Thus, a cached page would only be provided to the client if its format matched all the parameters (or a quantization thereof) included in the request.

### 2.2 ADL Server/Client Process

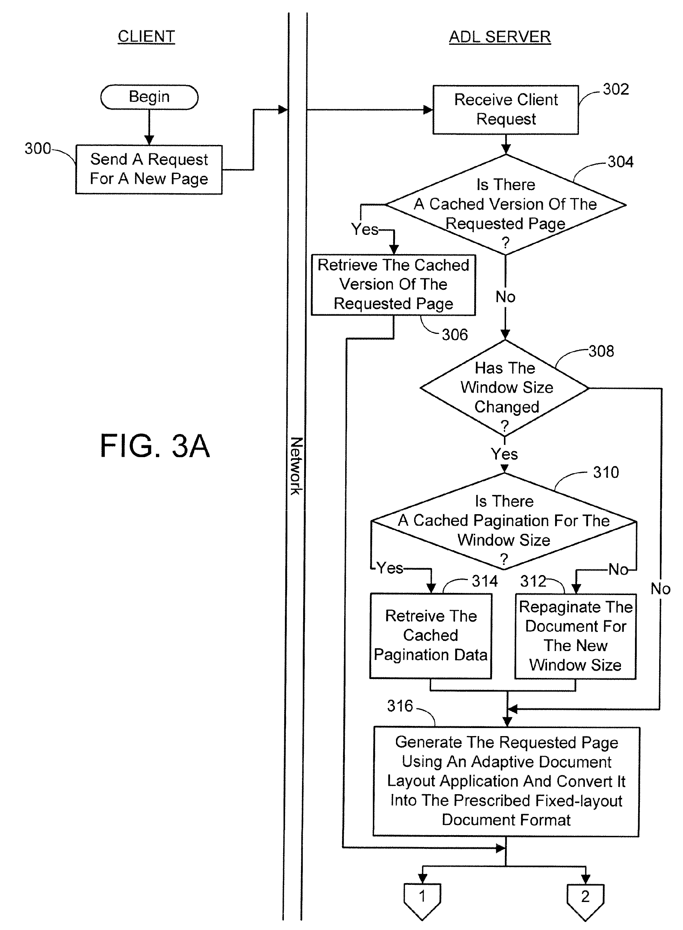

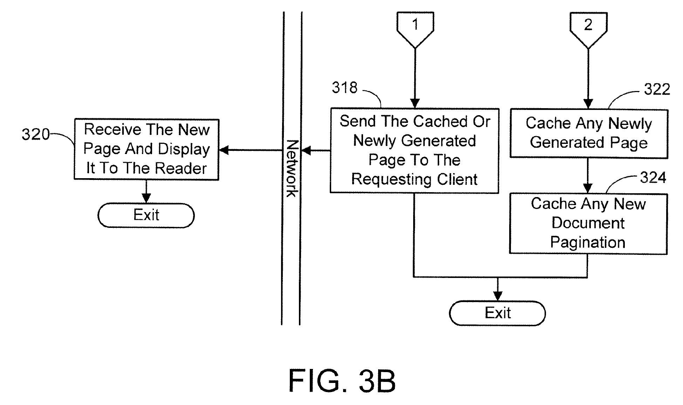

Referring to Figs. 3A-B, an exemplary process for implementing the ADL Server/Client system will be described next. The process starts with the client sending a request over a computer network for a new page in response to a reader entered command (process action 300). In the example described previously, this request would specify the page of the document desired and in what size window it is to be displayed. It is noted that these two items are included even if the reader does not want to change the page, but just resize it, or if the reader wants a new page but does not want to change the window size. The ADL server receives the request (process action 302) and first determines if there is a cached version of the requested page in the requested size (process action 304). If so, then the cached version of the requested page is retrieved (process action 306). If not, it is next ascertained if the specified window size has changed since the last request was processed (process action 308). If the size has changed, it is determined if there is a cached version of a pagination of the document in question for the requested window size (process action 310). If not, then the document in question is repaginated for the new size (process action 312). However, if cached pagination data for the specified window size is found, then it is retrieved instead (process action 314). On the other hand, if the size has not changed, then the repagination actions are skipped as shown in Fig. 3A. The requested page is then generated using an adaptive document layout application and converted into the prescribed fixed-layout document format (process action 316). It is noted that in the case where a cached pagination or a repaginated document is used to generate the requested page, in one embodiment this is accomplished by generating the page corresponding to the page number requested by the client In an alternate embodiment, however, the layout application generates a page that includes all, or at least as much of the initial portion of the text and/or graphics that would have been included on the requested page had the window size not changed, as will fit into the currently specified window size. The newly formatted page, or the retrieved cached page, whichever the case may be, is then sent to the requesting client via the computer network (process action 318). The client then receives the new page and displays it for the reader (process action 320). In the case of a newly formatted page, in addition to being sent to the client, it is also cached by the server (process action 322) for future use should a request come in for the same page at the same window size. In addition, any new pagination of the document in question is cached for future use (process action 324). The process then ends until the reader enters another command.

It is noted that in the foregoing exemplary process only new page and/or window size is requested. However, as described above additional formatting commands might also be included. Essentially, these additional formatting commands would be handled as described previously, by only providing a cached page if it met all the specified parameters of a client request (or some quantization thereof) and if no cached page is available with the specified parameters, generating a page that does reflect them.

## Claims

1. A computer-implemented process for providing a page of a document generated by an adaptive document layout application in a prescribed fixed-layout document format to a client computer over a client-server based network, comprising using a computer to perform the following process actions:
receiving a request for a page of a document, said request being sent by the client computer over the client-server based network;
generating the requested document page using the adaptive document layout application and converting it into the prescribed fixed-layout document format; and
transmitting the generated document page to the requesting client computer via the client-server based network.

2. The process of Claim 1, wherein the process action of receiving a request for a page of a document comprises an action of also receiving a request that the page be generated so as to fit in a specified window size when displayed, and wherein the process action of generating the requested document page comprises an action of generating the requested page in a form that will fit in the specified window size.

3. The process of Claim 2, wherein the received request for the document page represents a follow-on request in that at least one other page of the same document has been requested by the same client computer previously, and wherein the process action of generating the requested page in a form that will fit in the specified window size comprises the actions of:
determining if the specified window size is the same as that specified in an immediately preceding request;
whenever the specified window size is determined to have changed since the immediately preceding request, instructing the adaptive document layout application to repaginate the document in accordance with the newly received window size specification; and
generating a page of the repaginated document.

4. The process of Claim 3, wherein the process action of generating a page of the repaginated document, comprises an action of generating the page of the repaginated document corresponding to a requested page number

5. The process of Claim 3, wherein the process action of generating a page of the repaginated document, comprises an action of generating the page that comprises all or at least as much of the initial portion of the text and/or graphics, which would have been included on the requested page had the window size not changed, as will fit into the currently specified window size.

6. The process of Claim 2, wherein the received request for the document page represents a follow-on request in that at least one other page of the same document has been requested by the same client computer previously, and wherein the process action of generating the requested page in a form that will fit in the specified window size comprises the actions of:
determining if the specified window size is the same as that specified in an immediately preceding request;
whenever the specified window size is determined to have changed since the immediately preceding request, determining if there is a previously cached pagination of the document for the specified window size, and
if there is no previously cached pagination, instructing the adaptive document layout application to repaginate the document in accordance with the newly received window size specification and caching the pagination data, and
if there is a previously cached pagination, retrieving the cached pagination; and
generating a page of the repaginated document using the cached pagination or repaginated document as appropriate.

7. The process of Claim 1, wherein the process action of receiving a request for a page of the document comprises an action of also receiving a request that the page of the document be formatted in one or more specified ways which are within the capability of the adaptive document layout application to accomplish, and wherein the process action of generating the requested document page comprises an action of generating the requested page so as to exhibit the one or more format specifications received in the document page request.

8. The process of Claim 1, wherein the prescribed fixed-layout document format comprises a HTML page employing Cascading Style Sheets (CSS) absolute positioning properties to set the font and position of each word and graphics object in the page.

9. The process of Claim 1, wherein the prescribed fixed-layout document format is the Portable Document Format (PDF).

10. The process of Claim 1, wherein the prescribed fixed-layout document format is the Extensible Application Markup Language (XAML) format.

11. A computer-readable medium having computer-executable instructions for performing the process actions recited in Claim 1.

12. A system for providing a page of a document generated by an adaptive document layout application in a prescribed fixed-layout format to a client computer over a client-server based network, comprising:
a general purpose computing device;
a computer program comprising program modules executable by the general purpose computing device, wherein the computing device is directed by the program modules of the computer program to,
receive a request for a page of a document, said request being sent by the client computer over the client-server based network;
determine if the requested document page has been previously generated by the adaptive document layout application, converted into the prescribed fixed-layout document format and cached;
whenever it is determined the requested document page has not been cached,
generate the requested document page using the adaptive document layout application and converting it into the prescribed fixed-layout document format,
cache the converted document page, and
transmit the converted document page to the requesting client computer via the client-server based network; and
whenever it is determined the requested document page has been cached, transmit the cached document page to the requesting client computer via the client-server based network.

13. The system of Claim 12, wherein the program module for receiving a request for a page of a document comprises a sub-module for also receiving a request that the page be generated so as to fit in a specified window size when displayed, and wherein the program module for determining if the requested document page has been previously generated by the adaptive document layout application, converted into the prescribed fixed-layout document format and cached further comprises a sub-module for determining if the cached document page also was generated so as to fit in the specified window size, and wherein,
whenever it is determined the requested document page has not been cached and/or will not fit in the specified window size,
the requested document page is generated in a form that will fit in the specified window size using the adaptive document layout application and converted into the prescribed fixed-layout document format,
the converted document page is cached, and
the converted document page is transmitted to the requesting client computer via the client-server based network, and
whenever it is determined the requested document page has been cached and will fit in the specified window size, the cached document page is transmitted to the requesting client computer via the client-server based network.

14. The system of Claim 13, wherein a cached document page is categorized by what document it came from, its page number and its window size.

15. The system of Claim 14, wherein the sub-module for determining if a cached document page was generated so as to fit in the specified window size, comprises sub-modules for:
determining if there is a cached document page that has a window size within a prescribed tolerance of the requested window size; and
whenever it is determined that a cached document page has a window size within a prescribed tolerance of the requested window size, transmitting the cached document page to the requesting client computer via the client-server based network.

16. The system of Claim 12, wherein a cached document page is categorized by what document it came from, its page number, and which of a series of prescribed window size ranges the page's window size falls into.

17. The system of Claim 16, wherein the program module for receiving a request for a page of a document comprises a sub-module for also receiving a request that the page be generated so as to fit in a specified window size when displayed, and wherein the program module for determining if the requested document page has been previously generated by the adaptive document layout application, converted into the prescribed fixed-layout document format and cached further comprises a sub-module for determining if the window size of the requested document page falls into the window size range of the cached document page, and wherein,
whenever it is determined the requested document page has not been cached and/or its specified window size does not fall within the window size range of the cached document page,
the requested document page is generated in a form that will fit in the specified window size using the adaptive document layout application and converted into the prescribed fixed-layout document format,
the converted document page is cached and categorized, and
the converted document page is transmitted to the requesting client computer via the client-server based network, and
whenever it is determined the requested document page has been cached and its specified window size does fall within the window size range of the cached document page, the cached document page is transmitted to the requesting client computer via the client-server based network.

18. The system of Claim 12, further comprising, executing prior to the execution of the program module for receiving a request for a page of a document, the program modules for:
generating document pages using the adaptive document layout application and converting them into the prescribed fixed-layout document format for a variety of document pages; and
caching the converted document pages to create a database of document pages.

19. The system of Claim 18, wherein the program module for receiving a request for a page of a document comprises a sub-module for also receiving a request that the page fit in a specified window size when displayed, and wherein the program module for generating document pages using the adaptive document layout application and converting them into the prescribed fixed-layout document format for a variety of document pages, further comprises a sub-module for generating document pages using the adaptive document layout application and converting them into the prescribed fixed-layout document format for a variety of window sizes.

20. The system of Claim 12, wherein the program module for receiving a request for a page of a document comprises a sub-module for also receiving a request that the page of the document be formatted in one or more specified ways which are within the capability of the adaptive document layout application to accomplish, and wherein the program module for determining if the requested document page has been previously generated by the adaptive document layout application, converted into the prescribed fixed-layout document format and cached further comprises a sub-module for determining if the cached document page also was generated so as to exhibit the one or more format specifications received in the document page request, and wherein,
whenever it is determined the requested document page has not been cached and/or does not exhibit the one or more format specifications received in the document page request,
the requested page is generated so as to exhibit the one or more format specifications received in the document page request using the adaptive document layout application and converted into the prescribed fixed-layout document format,
the converted document page is cached, and
the converted document page is transmitted to the requesting client computer via the client-server based network, and
whenever it is determined the requested document page has been cached and does exhibit the one or more format specifications received in the document page request, the cached document page is transmitted to the requesting client computer via the client-server based network.

21. A computer-implemented process for obtaining a page of a document generated by an adaptive document layout application in a prescribed fixed-layout document format from a server over a client-server based network, comprising using a computer to perform the following process actions:
transmitting a request for a page of a document, said request being sent to the server over the client-server based network; and
receiving the requested document page via the client-server based network, which has been generated by the server using the adaptive document layout application and converted into the prescribed fixed-layout document format.

22. The process of Claim 21, further comprising a process action of displaying the received document page in the display area of a window displayed on a computer display device.

23. The process of Claim 22, wherein the process action of transmitting a request for a page of a document is done automatically when a reader enters a command to change the page of a document being displayed.

24. The process of Claim 23, wherein the reader enters a command to change the page of a document being displayed by entering a page up or page down command.

25. The process of Claim 22, wherein the process action of transmitting a request for a page of a document comprises an action of also transmitting a request that the page be generated so as to fit in a specified window size when displayed.

26. The process of Claim 25, wherein the process action of transmitting a request that the page be generated so as to fit in a specified window size is done automatically when a reader resizes the display area of the window used to display document pages.

27. The process of Claim 21, wherein the process action of transmitting a request for a page of a document comprises an action of also transmitting a request that the page of the document be formatted in one or more specified ways which are within the capability of the adaptive document layout application to accomplish.

28. A computer-readable medium having computer-executable instructions for performing the process actions recited in Claim 21.
